# EUROPÄISCHE PATENTSCHRIFT

(11) **EP 1 853 636 B1**
(45) Veröffentlichungstag und Bekanntmachung des Hinweises auf die Patenterteilung: **12.11.2008**
(21) Anmeldenummer: 06708096.0
(22) Anmeldetag: 08.02.2006
(51) Int. Cl.: C08F 6/22, B29B 15/04, B02C 7/06, B02C 7/11, C08F 279/02

(54) **VERFAHREN ZUR SALZFREIEN KOAGULATION VON POLYMERDISPERSIONEN**
METHOD FOR SALT-FREE COAGULATION OF POLYMER DISPERSIONS
PROCEDE DE COAGULATION SANS SEL DE DISPERSIONS POLYMERES

(30) Priorität: 15.02.2005 DE 102005006765
(43) Veröffentlichungstag der Anmeldung: 14.11.2007
(73) Patentinhaber: BASF SE, 67056 Ludwigshafen (DE)
(72) Erfinder: GÜNTHERBERG, Norbert, 67346 Speyer (DE); FISCHER, Wolfgang, 69190 Walldorf (DE); RADULLA, Manfred, 67061 Ludwigshafen (DE)
(74) Vertreter: Huhn, Michael
(86) Internationale Anmeldenummer: PCT/EP2006/050749
(87) Internationale Veröffentlichungsnummer: WO 2006/087279

(56) Entgegenhaltungen:
- EP-A- 1 319 682
- DE-A1- 19 654 169
- DE-A1- 19 720 959
- DE-C1- 4 110 943

## Beschreibung

Die Erfindung betrifft ein Verfahren zur salzfreien Koagulation von Polymerdispersionen.

Viele Polymere werden durch Homo- oder Copolymerisation geeigneter Monomere in einem flüssigen-Medium z.B. durch Emulsions-, Miniemulsions- oder - Mikrosuspensionspolymerisation hergestellt. Das Polymere fällt dabei in Form einer meist wässrigen Feststoffdispersion an, aus der das Polymere abgetrennt werden muss, sofern die Dispersion nicht als solche verwendet werden soll.

Das Abtrennen der Polymeren aus der Dispersion geschieht üblicherweise durch Koagulation. Hierzu sind eine Reihe verschiedener Verfahren bekannt. So können Dispersionen durch Zugabe von starken Elektrolyten koaguliert werden. Hierfür werden zumeist Salze verwendet, die mehrwertige Kationen, wie Ca²⁺, Mg²⁺ oder Al³⁺ enthalten. Nachteilig bei dieser Methode ist, dass relativ große Mengen an Fällmitteln im Produkt verbleiben und zu einer Verschlechterung von wichtigen Produkteigenschaften führen. Man ist deshalb gezwungen, das gefällte Polymer mit großen Mengen an Wasser nachzuwaschen, was zu ökonomischen und ökologischen Problemen führt. Ein weiterer Nachteil der Fällung mit Elektrolyten ist, dass das gefällte Produkt oftmals als Klumpen, der ungefälltes Material oder überschüssiges Fällmittel enthält, oder als sehr feinteiliges Material mit der Schwierigkeit der Abtrennung durch Sedimentation oder Filtration anfällt.

Es ist des weiteren bekannt geworden, Polymerdispersionen dadurch zu koagulieren, dass sie hohen Scherkräften unterworfen werden. Dabei wird die jeweilige Polymerdispersion so lange hohen Scherkräften unterworfen, bis die Polymerpartikel agglomerieren. Bei einem Feststoffgehalt des Polymers oberhalb von 20% kann das so koagulierte Polymer pastös bis krümelig werden.

Aus DE-A-196 54 169 ist ein Verfahren zur Koagulation von Pfropfkautschukdispersionen durch Koagulation mittels Scherfällung in einer Stator/Rotor-Anordnung bekannt, wobei sowohl der Stator als auch der innerhalb des Stators rotierende Rotor Schlitze aufweisen, durch die die Dispersion durch die Rotation des Rotors radial von innen nach außen geführt wird. Dadurch wird die Dispersion einer so starken Scherung unterworfen, dass sie koaguliert. Das dort beschriebene Verfahren weist eine Reihe von Nachteilen auf: Die Fällapparatur muss für jede konkrete Dispersionstype einzeln ausgelegt werden. Wechsel der Dispersionstypen erfordern Änderungen im technischen Aufbau der Apparatur. Mit der beschriebenen Fällapparatur kann nicht immer eine vollständige Fällung erreicht werden. Hierfür ist oft ein Animpfen mit einer Salzlösung erforderlich, wobei jedoch Salzreste im Produkt verbleiben, die bei sensiblen Anwendungen störend sein können. Die gesamte Apparatur muss regelmäßig gründlich und vollständig gespült werden, sonst sinkt die Fällausbeute oder es kommt zu einem Druckaufbau vor dem Scherapparat, der zu einer Abschaltung der Dispersionsförderorgane führt. Darüber hinaus kommt es bei einem zu niedrigen Durchsatz durch die Apparatur zum Plastifizieren des Kautschuks. Eine Änderung der Spaltweite ist nur durch den Austausch von Schneckenelementen möglich, was entsprechend aufwendig ist und die Verfügbarkeit der Anlage reduziert.

Es war demgegenüber Aufgabe der Erfindung, eine verbesserte Vorrichtung und ein entsprechendes Verfahren zur Verfügung zu stellen, das insbesondere einen wirtschaftlicheren Betrieb, mit erhöhten Standzeiten und hoher Fällausbeute, d.h. geringen Anteilen an nichtgefällter Dispersion bei rein physikalischer Fällung, ohne Zusatz von Fällsalzen, gewährleistet.

Die Aufgabe wird gelöst durch eine Rotor/Stator-Vorrichtung zur salzfreien Koagulation von Polymerdispersionen mit einem Lagerbock, einem Gehäuse, einer darin gelagerten Rotorwelle, an deren gehäuseseitigem Ende ein mit konischer Oberfläche ausgebildeter Rotor befestigt ist, dem konzentrisch ein im Gehäuse befestigter Stator zugeordnet ist, wobei Rotor und Stator mit ihren einander zugekehrten Oberflächen einen Scherspalt bilden, der von einem Ringraum umschlossen ist, dem ein axialer Zuführstutzen vorgeschaltet und mindestens ein radialer Auslassstutzen nachgeschaltet ist, wobei Rotor und Stator zur Einstellung der Spaltweite axial verschiebbar gelagert sind, die dadurch gekennzeichnet ist, dass im Bereich des axialen Zuführstutzens im Gehäuse und/oder im Stator ein oder mehrere Spülstutzen in Form von nach außen durchgehenden Bohrungen vorgesehen sind.

Die Erfindung geht aus von einer Rotor/Stator-Vorrichtung, wie sie zum Dispergieren, Verteilen und Homogenisieren in DE 197 20 959 beschrieben und unter der Bezeichnung Supraton® bekannt ist: Rotor und Stator bilden zwischen den einander zugeordneten Oberflächen einen konischen Scherspalt aus, dessen Weite durch die axiale Verschiebung von Rotor und/oder Stator eingestellt werden kann. Die Vorrichtung hat einen axialen Zuführstutzen für die Zuführung des zu behandelnden Gemisches zum Scherspalt und einen radialen Auslassstutzen für die Abführung desselben aus dem Scherspalt.

Diese Rotor/Stator-Vorrichtung wird erfindungsgemäß für die gegenüber der aus DE 197 20 959 entgegengesetzten Verfahrensoperation, und zwar zur Koagulation von Polymerdispersionen eingesetzt, und hierzu wie folgt modifiziert:

Im Bereich des axialen Zuführstutzens werden ein oder mehrere Spülstutzen in Form von nach außen durchgehenden Bohrungen vorgesehen. Alternativ oder zusätzlich können ein oder mehrere Spülstutzen in Form von nach außen durchgehenden Bohrungen auch im Stator vorgesehen sein.

Darüber hinaus ist es möglich, auch in der Rohrleitung unmittelbar vor der Rotor/Stator-Vorrichtung eine oder mehrere nach außen durchgehende Bohrungen vorzusehen. In einer weiteren bevorzugten Ausführungsform können auch ein oder mehrere weitere Spülstutzen für das Spülen des Ringraumes um den Scherspalt ausgebildet sein.

Es kann eine einzige Bohrung ausreichend sein, es ist jedoch auch möglich, zwei oder mehrere Bohrungen vorzusehen. Diese können bevorzugt symmetrisch zueinander angeordnet sein.

Die Geometrie der Bohrungen ist nicht erfindungswesentlich, insbesondere sind kreiszylindrische Bohrungen möglich. Die Weite der Bohröffnung(en) wird zweckmäßigerweise so gewählt, dass ein problemloses Durchspülen der Zuführöffnung über die Bohröffnung möglich ist. Insbesondere kann (können) die Bohröffnung(en) eine Weite im Bereich von 1 bis 50 mm, bevorzugt 3 bis 30 mm aufweisen. In die Bohröffnung kann eine Düse zur Verbesserung der Wandabreinigung des Bereiches der Zuführöffnung bis zum Scherspalt eingebaut sein.

Die einander zugewandten Oberflächen von Rotor und Stator, die den Scherspalt ausbilden, können glatt, rau oder strukturiert sein.

Vorteilhaft können auch, zur Erhöhung der Scherkräfte, an den einander zugewandten Flächen von Rotor und Stator Aus- oder Einbuchtungen (Zahnkränze, Taschen etc.) vorgesehen sein, dass Doppel-Spalt-Doppellochreihen oder eine Kombination aus Loch und Spalt entstehen und der Auslass aus dem Spalt oder dem Loch nur bei der Überlappung von zwei Schlitzen bzw. Löchern freigegeben wird, führt zu lokal sehr hohen Scherraten mit hochfrequent oszillierenden Kräften, die dauerhaft hohe Fällausbeuten ermöglichen.

Rotor und Stator können aus unterschiedlichen, den Eigenschaften der Einsatzstoffe und der jeweiligen Fällaufgabe unter Berücksichtigung der bei Betrieb auftretenden hohen Geschwindigkeiten und entsprechenden Fliehkräften geeigneten Materialien aufgebaut sein. Beispielsweise können geeignete legierte Stähle eingesetzt werden, oder Keramik, SiC-Mineralguss, spezielle Kunststoffe oder sonstige geeignete Werkstoffe, wobei die genannten lediglich beispielhaft genannt sind und keinerlei Einschränkung darstellen sollen. Im Allgemeinen sind Rotor und Stator aus dem gleichen Werkstoff gefertigt, jedoch ist es auch möglich, beide aus unterschiedlichen Werkstoffen zu fertigen.

Gegenstand der Erfindung ist ein Verfahren zur salzfreien Koagulation von Polymerdispersionen in einer Rotor/Stator-Vorrichtung mit einem Lagerbock, einem Gehäuse, einer darin gelagerten Rotorwelle, an deren gehäuseseitigem Ende ein mit konischer Oberfläche ausgebildeter Rotor befestigt ist, dem konzentrisch ein im Gehäuse befestigter Stator zugeordnet ist, wobei Rotor und Stator mit ihren einander zugekehrten Oberflächen einen Scherspalt bilden, der von einem Ringraum umschlossen ist, dem ein axialer Zuführstutzen vorgeschaltet und mindestens ein radialer Auslassstutzen nachgeschaltet ist, wobei Rotor und Stator zur Einstellung der Spaltweite axial verschiebbar gelagert sind, das dadurch gekennzeichnet ist, dass die Polymerdispersion über den axialen Zuführstutzen zugeführt, durch den Scherspalt zwischen Rotor und Stator gefördert und hierbei unter vorbestimmter Schergeschwindigkeit und Scherdeformation gefällt und über den oder die radialen Auslassstutzen ausgetragen wird.

Dadurch, dass sich im Betrieb durch Ablagerungen auch vor dem Spalt, im Bereich der Zuführöffnung, aufgrund der dort auftretenden Scherraten, Koagulate bilden, kann der Zulauf für die wässrige Polymerdispersion verstopft und der Betrieb be- oder verhindert werden.

Diese Problematik wird erfindungsgemäß reduziert oder verhindert, indem die Zuführöffnung, insbesondere auch während des Betriebs der Vorrichtung zur Koagulation, über die eine oder mehrere Bohrungen kontinuierlich oder bevorzugt getaktet mit Wasser gespült wird. Hierbei werden für die getaktete Zuführung von Wasser übliche Einrichtungen, insbesondere Magnetventile, gegebenenfalls in Kombination mit Einspritzdüsen, vorgesehen.

Die Problematik der Verstopfung durch die Bildung von Ablagerungen tritt darüber hinaus auch hinter dem Scherspalt auf: Solange maximal ein Spülstutzen vorgesehen ist, kann sich im Ringraum eine bevorzugte Strömungsrichtung ausbilden, so dass ein Teil des Ringraums verstopft. Eine teilweise Behinderung des Austritts aus dem Scherspalt kann zu Verstopfungen oder zum Plastifizieren des Kautschuks im Scherspalt führen. Die Bildung von Ablagerungen kann auch durch Anbringen weiterer Auslassstutzen verhindert werden.

Indem zusätzlich zum vorhandenen radialen Auslassstutzen aus dem Ringraum um den Scherspalt ein oder mehrere radiale Spülstutzen vorgesehen werden, durch die der Ringraum mit Wasser gespült werden kann, wird ein massives Absinken der Viskosität der gefällten Dispersion im Ringraum erreicht, so dass das gefällte Material abfließen kann oder dass eine Förderung auch durch längere Leitungen über die Pumpwirkung durch den Scherapparat erfolgen kann. Gleichzeitig wird die Bildung von Ablagerungen verhindert.

Das Verfahren wird bevorzugt bei einer Scherrate von 1000 bis 1 Mio s⁻¹ und einer Scherdeformation von 1 bis 100.000 durchgeführt. Die Drehzahl des Rotors liegt bevorzugt im Bereich von 50 bis 10.000 U/min, insbesondere von 200 bis 8000 U/min.

Das erfindungsgemäße Verfahren kann beispielsweise zur Koagulation von wässrigen Polymerdispersionen und bevorzugt von Kautschuk-, insbesondere von Pfropfkautschukdispersionen verwendet werden, die beispielsweise aufgebaut sind aus:
60 bis 100 Gew.-Teilen, bezogen auf Gesamtgewicht der fertigen Dispersion, wenigstens eines einpolymerisierbaren Monomers (Hauptmonomer),
0 bis 35 Gew.-Teilen, vorzugsweise 0 bis 20 Gew.-Teile, wenigstens eines funktionellen Monomers (Comonomer) und
0 bis 5 Gew.-Teile, vorzugsweise 0 bis 3 Gew.-Teile, einer α, β-ungesättigten Mono- oder Dicarbonsäure, vorzugsweise 0 bis 3 Gew.-%.

Das Hauptmonomer ist vorzugsweise ausgewählt aus:
- Estern aus vorzugsweise 3 bis 6 C-Atomen aufweisenden α,β-monoethylenisch ungesättigten Mono- oder Dicarbonsäuren, wie Acrylsäure, Methacrylsäure, Maleinsäure, Fumarsäure und Itaconsäure, mit im allgemeinen C₁-C₁₂-, vorzugsweise C₁-C₈- und insbesondere C₁-C₄-Alkanolen.
   Derartige Ester sind insbesondere Methyl-, Ethyl-, n-Butyl-, Isobutyl-, tert.-Butyl- und 2-Ethylhexylacrylat und -methacrylat;
- vinylaromatischen Verbindungen, wie Styrol, α-Methylstyrol, α-Chlorstyrol oder Vinyltoluole;
- Vinylestern von C₁-C₁₈-Mono- oder -Dicarbonsäuren, wie Vinylacetat, Vinylpropionat, Vinyl-n-butyrat, Vinylaurat und Vinylstearat;
- Butadien.

Besonders bevorzugte Hauptmonomere sind Methylmethacrylat, Methylacrylat, n-Butylmethacrylat, t-Butylmethacrylat, Ethylacrylat, n-Butylacrylat, 2-Ethylhexylacrylat, Styrol und Vinylacetat und ganz besonders bevorzugt n-Butylacrylat und Butadien.

Geeignete Comonomere sind insbesondere:
- Lineare 1-Olefine, verzweigtkettige 1-Olefine oder cyclische Olefine, wie z.B. Ethen, Propen, Buten, Isobuten, Penten, Cyclopenten, Hexen, Cyclohexen, Octen, 2,4,4-Trimethyl-1-penten gegebenenfalls in Mischung mit 2,4,4-Trimethyl-2-penten, C₈-C₁₀-Olefin, 1-Dodecen, C₁₂-C₁₄-Olefin, Octadecen, 1-Eicosen (C₂₀), C₂₀-C₂₄-Olefin; metallocenkatalytisch hergestellte Oligoolefine mit endständiger Doppelbindung, wie z.B. Oligopropen, Oligohexen und Oligooctadecen; durch kationische Polymerisation hergestellte Olefine mit hohem α-Olefin-Anteil, wie z.B. Polyisobuten. Vorzugsweise ist jedoch kein Ethen oder kein lineares 1-Olefin in das Polymerisat einpolymerisiert.
- Acrylnitril, Methacrylnitril.
- Vinyl- und Allylalkylether mit 1 bis 40 Kohlenstoffatomen im Alkylrest, wobei der Alkylrest noch weitere Substituenten wie eine Hydroxygruppe, eine Amino- oder Dialkylaminogruppe oder eine bzw. mehrere Alkoxylatgruppen tragen kann, wie z.B. Methylvinylether, Ethylvinylether, Propylvinylether, Isobutylvinylether, 2-Ethylhexylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butylamino)ethylvinylether, Methyldiglykolvinylether sowie die entsprechenden Allylether bzw. deren Mischungen.
- Acrylamide und alkylsubstituierte Acrylamide, wie z.B. Acrylamid, Methylacrylamid, N-tert.-Butylacrylamid, N-Methyl-(meth)acrylamid.
- Sulfogruppenhaltige Monomere, wie z.B. Allylsulfonsäure, Methallylsulfonsäure, Styrolsulfonat, Vinylsulfonsäure, Allyloxybenzolsulfonsäure, 2-Acrylamido-2-methylpropansulfonsäure, deren entsprechende Alkali- oder Ammoniumsalze bzw. deren Mischungen sowie Sulfopropylacrylat, Sulfopropylmethacrylat.
- C₁- bis C₄-Hydroxyalkylester von C₃- bis C₆-Mono- oder Dicarbonsäuren (siehe oben), insbesondere der Acrylsäure, Methacrylsäure oder Maleinsäure, oder deren mit 2 bis 50 Mol Ethylenoxid, Propylenoxid, Butylenoxid oder Mischungen davon alkoxylierte Derivate, oder Ester von mit 2 bis 50 Mol Ethylenoxid, Propylenoxid, Butylenoxid oder Mischungen davon alkoxylierten C₁- bis C₁₈-Alkoholen mit den erwähnten Säuren (Monomere b₆), wie z.B. Hydroxyethyl-(meth)acrylat, Hydroxypropyl(meth)acrylat, Butandiol-1,4-monoacrylat, Ethyldiglykolacrylat, Methylpolyglykolacrylat (11 EO), (Meth)acrylsäureester von mit 3, 5, 7, 10 oder 30 Mol Ethylenoxid umgesetztem C₁₃/C₁₅-Oxoalkohol bzw. deren Mischungen.
- Vinylphosphonsäure, Vinylphosphonsäuredimethylester u.a. phosphorhaltige Monomere.
- Alkylaminoalkyl(meth)acrylate oder Alkylaminoalkyl(meth)acrylamide oder deren Quatemisierungsprodukte, wie z.B. 2-(N,N-Dimethylamino)ethyl(meth)acrylat, 3-(N,N-Dimethylamino)-propyl(meth)acrylat, 2-(N,N,N-Trimethylammonium)ethyl(meth)acrylat-chlorid, 2-Dimethylaminoethyl(meth)acrylamid, 3-Dimethylaminopropyl(meth)acrylamid, 3-Trimethylammoniumpropyl(meth)acrylamid-chlorid.
- Allylester von C₁- bis C₃₀-Monocarbonsäuren.
- N-Vinylverbindungen, wie N-Vinylformamid, N-Vinyl-N-methylformamid, N-Vinylpyrrolidon, N-Vinylimidazol, 1-Vinyl-2-methylimidazol, 1-Vinyl-2-methyl.imidazolin, N-Vinylcaprolactam, Vinylcarbazol. 2-Vinylpyridin, 4-Vinylpyridin.
- Diallyldimethylammoniumchlorid, Vinylidenchlorid, Vinylchlorid, Acrolein, Methacrolein.
- 1,3-Diketogruppen enthaltende Monomere wie z.B. Acetoaoetoxyethyl(meth)acrylat oder Diacetonacrylamid, harnstoffgruppenhaltige Monomere, wie Ureidoethyl(meth)acrylat, Acrylamidoglykolsäure, Methacrylamidoglykolatmethylester.
- Silylgruppen enthaltende Monomere wie z.B. Trimethoxysilylpropylmethacrylat.
- Glycidylgruppen enthaltende Monomere wie z.B. Glycidylmethacrylat.

Für das erfindungsgemäße Verfahren der Koagulation sind neben normalen Emulsionen besonders Pfropfkautschukdispersionen geeignet, die durch Pfropfung der Elastomeren mit den Monomeren für die Pfropfhülle zumindest in der letzten Verfahrensstufe der Pfropfpolymerisation in wässriger Emulsion hergestellt wurden.

Unter Pfropfkautschuken werden dabei insbesondere solche Pfropfpolymere verstanden, bei denen auf Teilchenkerne aus weichem Kautschuk harte Thermoplaste bildende Monomere, wie insbesondere Styrol, Acrylnitril und/oder Methylmethacrylat als Pfropfhülle oder Pfropfschale aufgepfropft werden, was durch Polymerisation oder Copolymerisation der Monomeren für die Pfropfhülle in Gegenwart der Kautschukteilchen erfolgt. Als weiche Kautschuke eignen sich elastomere Polymere und/oder Copolymere mit Glasübergangstemperaturen von unter -10°C und bevorzugt von unter -30°C. Besonders geeignet sind elastomere 1,3-Dien-Homo- und Copolymere, wie Butadien-, Isopren- oder Chloropren-Homo- und Copolymere, bevorzugt Butadien-Kautschuk, sowie elastomere Acrylester-Homo- und/oder -Copolymere mit den genannten niedrigen Glasübergangstemperaturen. Elastomere Acrylesterpolymere und 1,3-Dien-Homo- und - Copolymere sind für die erfindungsgemäß koagulierten Pfropfkautschuke bevorzugte, wie Homo- und -Copolymere von C₄- bis C₈-Alkylacrylaten, insbesondere von n-Butylacrylat und/oder 2-Ethylhexylacrylat. Beispiele von bevorzugten Comonomeren der Alkylacrylate sind vernetzende Monomere mit mindestens zwei nichtkonjugierten C=C-Doppelbindungen, wie Diallylmaleat, Diallylphthalat, Diacrylate und Dimethacrylate von Diolen, wie 1,4-Butandiol oder 1,6-Hexandiol usw., sowie Allylmethacrylat oder Dihydrodicydopentadienylacrylat, die insbesondere in einer Menge von 0,5 bis 10 Gew.-% der Gesamtmonomerenmenge bei der Elastomerenherstellung verwendet werden, ferner polare Monomere, wie Acrylsäure, Methacrylsäure, Maleinsäureanhydrid, Acrylamid, Methacrylamid, N-Methylolacrylamid oder - Methacrylamid und deren Alkylether. Der Anteil der Elastomeren im Pfropfkautschuk beträgt im allgemeinen 30 bis 85 Gew.%, wobei nach dem erfindungsgemäßen Verfahren solche Pfropfkautschuke ohne Probleme koaguliert werden können, deren Elastomerenanteil mehr als 30 Gew.%, bezogen auf den Gesamtfeststoffgehalt, beträgt.

Als Monomere für Aufpolymerisieren der Pfropfhülle oder Pfropfschale sind insbesondere Monomere und deren Mischungen geeignet, die harte Polymerisate bzw. Copolymerisate mit Glasübergangstemperaturen von über +50°C bilden. Die Art des bzw. der Monomeren richtet sich dabei weitgehend nach der Art der Thermoplasten, die nach Abmischung mit dem Pfropfkautschuk die Polymermatrix bilden und zu denen zur Erzielung einer feinen Zweiphasen-Verteilung der Pfropfkautschuke in der Matrix die Propfhülle eine gewisse Verträglichkeit bzw. Affinität aufweisen soll. Besonders geeignete und übliche Monomere sind solche mit 8 bis 12 C-Atomen, wie Styrol, α-Methylstyrol, sowie Styrole und α-Methylstyrole, die am Benzolkern ein oder mehrere Alkyl-, insbesondere Methylgruppen als Substituenten tragen. Sie können die alleinigen Monomeren für die Herstellung der Pfropfhülle sein oder im Gemisch mit anderen Monomeren, wie Methylmethacrylat, Methacrylnitril und bevorzugt Acrylnitril- verwendet werden, wobei die Methacrylnitril-und/oder Acrylnitril-Monomereinheiten in der Pfropfhülle einen Anteil von 0 bis 45 Gew.-% und bevorzugt 10 bis 40 Gew.-% der Pfropfhülle aufweisen. Bevorzugt sind Mischungen von Styrol mit 10 bis 40 Gew.-% der Gesamtmonomerenmenge an Acrylnitril. Als bevorzugte weitere Monomere für die Herstellung der Pfropfhülle seien auch Methacrylsäureester und Acrylsäureester genannt, von denen Methylmethacrylat bevorzugt ist, das auch als alleiniges oder in überwiegender Menge verwendetes Monomeres für die Herstellung der Pfropfhülle verwendet werden kann. Geeignete Comonomere für die Herstellung der Pfropfhülle sind auch Maleinsäureanhydrid, Maleinsäureimid, N-Phenylmaleinsäureimid, Acrylsäure und Methacrylsäure.

Beispiele für die Herstellung derartiger, für die Anwendung der Scherfällung geeigneter Dispersionen sind z. B. in DE-A-3 22 75 55, DE-A-3 14 93 58 und DE-A-3 41 41 18 beschrieben, worauf hier verwiesen wird. Diese Beispiele haben jedoch exemplarischen Charakter. Die Anwendung der erfindungsgemäßen Scherfällung ist nicht auf die hier genannten Beispiele von Dispersionen beschränkt.

Zusätzlich zur Reduzierung oder Vermeidung der Verstopfungsproblematik in der Rotor/Stator-Vorrichtung, insbesondere in der Zuführöffnung und dem Ringraum um den Scherspalt, werden mit der Erfindung weitere Vorteile erreicht:

Durch die konische Ausbildung des Scherspaltes wird eine Förderwirkung im Apparat ähnlich einer Kreiselpumpe erreicht, die zur Förderung der Polymerdispersion zur Rotor/Stator-Vorrichtung sowie für den Austrag der gefällten Polymerdispersion aus der Vorrichtung genutzt werden kann.

Das erfindungsgemäße Verfahren arbeitet völlig salzfrei bzw. frei von der Zugabe von Koagulantien. Es erfolgt eine praktisch vollständige Fällung, das heißt eine hohe Fällausbeute von 95 %, bevorzugt 98 % oder höher. Die Fällausbeute ist durch folgende Formel definiert: FA = 100 - FG2/FG1 x (100 - FG1) / (1 - FG2/100) wobei FA die Fällausbeute, FG1 der Gesamtfeststoffgehalt der nicht ausgequetschten und unfiltrierten Ausgangsprobe ist und FG2 der Feststoffgehalt im Filtrat 2, jeweils in %, ist. Zur Bestimmung von FG2 wird die schergefällte Ausgangsprobe in einem Nesseltuch ausgequetscht und das hierbei anfallende Filtrat 1 über einen Papierfilter abfiltriert, um das Filtrat 2 zu erhalten. Diese hohen Fällausbeuten sind vorteilhaft, damit in nachgelagerten Verfahrensschritten, insbesondere thermischer Behandlung, keine Probleme auftreten. Indem das Verfahren vollständig salzfrei arbeitet, das heißt auch zum Starten der physikalischen Fällung ("Animpfen") keine Salzzugabe erforderlich ist, wird eine kontinuierlich hohe Fällausbeute und ein entsprechend konstanter Betrieb gewährleistet.

Die Erfindung wird im Folgenden anhand einer Figur und eines Ausführungsbeispiels näher erläutert:

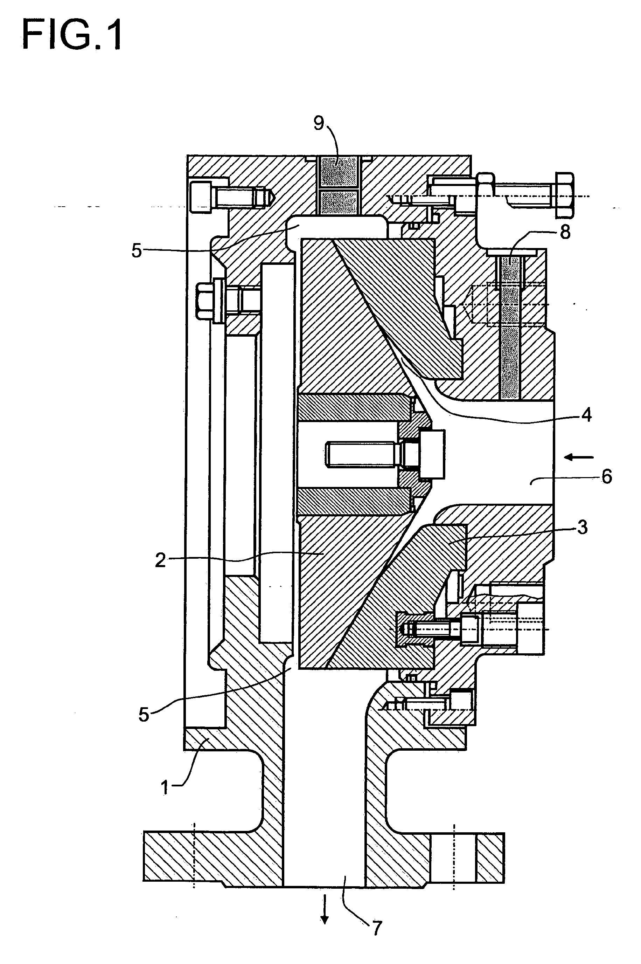

Die einzige Figur 1 zeigt die schematische Darstellung einer bevorzugten Ausführungsform einer Rotor/Stator-Vorrichtung nach der Erfindung.

In einem Gehäuse 1 ist ein Rotor 2 und ein Stator 3 angeordnet, mit einander zugewandten konischen Oberflächen, die einen Scherspalt 4 ausbilden. Dem Scherspalt 4 ist ein axieller Zuführstutzen 6 vorgeschaltet, mindestens ein radialer Auslassstutzen nachgeschaltet und er ist von einem Ringraum 5 umschlossen. Im Bereich des axialen Zuführstutzens 6 ist im Gehäuse 1 beispielhaft ein Spülstutzen 8 in Form einer nach außen durchgehenden Bohrung vorgesehen. Ein weiterer Spülstutzen 9 ist zur Spülung des Ringraumes 5 um den Scherspalt 4 ebenfalls als eine nach außen durchgehende Bohrung vorgesehen.

### Ausführungsbeispiel 1: Fällung eines Acrylat-Pfropfkautschuks

Es wurde ein Pfropfkautschuk entsprechend der in DE-A 32 27 555 beschriebenen Vorschrift hergestellt:
Herstellung eines Grundkautschukes, Komponente A1:
   16 Teile Butylacrylat und 0,4 Teile Tricyclodecenylacrylat werden in 150 Teilen Wasser unter Zusatz von 0,5 Teilen des Natriumsalzes einer C₁₂- bis C₁₈-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Polymerisationsreaktion wurden innerhalb von 3 Stunden eine Mischung aus 82 Teilen Butylacrylat und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.-%. Die mittlere Teilchengröße (Gewichtsmittel) wurde zu 216 nm ermittelt. Die Teilchengrößenverteilung war eng (Quotient Q = 0,29).
Herstellung eines Grundkautschukes, Komponente A2:
   Zu einer Vorlage aus 2,5 Teilen des in Beispiel 1 (Komponente A) hergestellten Latex wurden nach Zugabe von 50 Teilen Wasser und 0,1 Teil Kaliumpersulfat im Verlauf von 3 Stunden einerseits eine Mischung aus 49 Teilen Butylacrylat und 1 Teil Tricyclodecenylacrylat und andererseits eine Lösung von 0,8 Teilen des Natriumsalzes einer C₁₂- bis C₁₈-Paraffiinsulfonsäure in 25 Teilen Wasser bie 60°C zulaufen gelassen. Nach Zulaufende wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel) des Latex wurde zu 410 nm ermittelt. Die Teilchengrößenverteilung war eng (Q = 0,1).
Herstellung des Pfropfkautschukes, Komponente B1:
   150 Teile des nach (a) erhaltenen Polybuylacrylat-Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Nach Beendigung der ersten Stufe der Pfropfmischpolymerisation hatte das Pfropfmischpolymerisat einen Pfropfgrad von 17 %. Diese Pfropfmischpolymerisatdispersion wurde ohne weitere Zusatzstoffe mit 20 Teilen einer Mischung aus Styrol und Acrylnitril (Verhältnis 75 : 25) weitere 3 Stunden polymerisiert. Nach Beendigung der Pfropfmischpolymerisation wurde das Produkt mittels Calciumchloridlösung bei 95°C aus der Dispersion gefällt, mit Wasser gewaschen und im warmen Luftstrom getrocknet. Der Pfropfgrad des Pfropfmischpolymerisats betrug 35 %, die mittlere Teilchengröße der Latexteilchen wurde zu 238 nm ermittelt.
Herstellung des Pfropfkautschukes, Komponente B2:
   150 Teile des nach A 2) erhaltenen Polybutylacrylat-Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Die bei dieser Pfropfmischpolymerisation erhaltene Dispersion wurde dann mit 20 Teilen eines Gemisches aus Styrol und Acrylnitril im Verhältnis 75 : 25 weitere 4 Stunden polymerisiert

Das Reaktionsprodukt wurde dann durch Fällung in einer erfindungsgemäßen Rotor/Stator-Anordnung aus einem Siliziumcarbit-Mineralguss mit einem Scherspaltmaß zwischen Rotor und Stator von 1,5 mm bei einem Durchsatz von 1400 kg/h und einer Drehzahl des Rotors von 6250 U/min abgetrennt, die während der Fällung wie folgt gespült wurde:
Der den Scherspalt umschließende Ringraum (Bezugsziffer 5 in Figur 1) wurde kontinuierlich, während des gesamten Fällvorganges, über drei Anschlüsse in 3,9 und 12 Uhr-Stellung mit je 60 l Wasser pro Stunde gespült.

Über den Spülstutzen entsprechend Bezugsziffer 8 in Figur 1 im Bereich der axialen Zuführöffnung (Bezugsziffer 6) wurde getaktet, alle 3 min für jeweils 5 sec mit jeweils 500 m³ Wasser pro Stunde gespült.

Darüber hinaus wurde die Rohrleitung in einem Abstand von ca. 10 cm vor dem Verbindungsflansch zur Rotor/Stator-Vorrichtung ebenfalls getaktet, alle 3 min für jeweils 5 sec mit jeweils 500 m³ Wasser pro Stunde gespült.

Es wurde eine Fällausbeute von 98,6 bis 99,3 % erhalten.

### Ausführungsbeispiel 2: Fällung eines Butadien-Kautschuks

Es wurde ein Butadien-Kautschuk entsprechend Beispiel 1 aus DE-A 196 54 169 in einer Rotor/Stator-Anordnung gefällt.

Herstellung der Pfropfkautschukdispersion mit Polybutadien als Pfropfgrundlage (entsprechend Beispiel 1 aus der DE-A 196 54 169):
In einer Lösung von 0,6 Teilen tert. Dodecylmercaptan, 0,7 Teilen von Natrium-C₁₄-Alkylsulfonat als Emulgator, 0,2 Teilen Kaliumperoxodisulfat und 0,2 Teilen Natriumdisulfat in 80 Teilen Wasser wurden bei 65°C 60 Teile Butadien bis zu einem Monomerenumsatz von 98 % polymerisiert. Im erhaltenen Latex hatte das Polybutadien eine mittlere Teilchengröße von 100 nm und wurde daher durch Zusatz von 25 Teilen einer 10 %igen Emulsion eines Copolymeren aus 96 % Ethylacrylat und 4 % Methacrylamid agglomeriert, wobei sich eine mittlere Teilchengröße von 350 nm einstellte. Die Glasübergangstemperatur des Polybutadiens beträgt -85°C.

Zum Produkt wurden 40 Teile Wasser, 0,4 Teile Natrium-C₁₄-Alkylsulfonat, 0,2 Teile Kaliumperoxodisulfat zugegeben.

40 Teile einer Mischung von 70 % Styrol und 30 % Acrylnitril wurden innerhalb von 4 Stunden allmählich zugegeben und der Ansatz unter Rühren bei 7°C gehalten. Der Monomerenumsatz war praktisch quantitativ. Die Glastemperatur eines Copolymerisats aus 70 % Styrol und 30 % Acrylnitril beträgt ca. +105°C.

Die so hergestellte Dispersion wurde auf einer Rotor/Stator-Anordnung, die als Taschenkegelwerkzeug ausgebildet war, mit je einer, auf den äußeren, einander zugewandten Oberflächen von Rotor und Stator angebrachten Schlitzreihen, mit einem Scherspaltmaß zwischen Rotor und Stator von 2,5 mm, einem Durchsatz von 1400 kg/h und einer Drehzahl des Rotors von 6250 U/min, koaguliert.

Die Spülung von Ringraum, im Flansch zum axialen Zuführstutzen sowie in der Rohrleitung erfolgte wie zu Ausführungsbeispiel 1 beschrieben.

Es wurde eine Fällausbeute von 98,5 bis 99,2 % erreicht.

## Patentansprüche

1. Verfahren zur salzfreien Koagulation von Polymerdispersionen in einer Rotor/Stator-Vorrichtung mit einem Lagerbock, einem Gehäuse (1), einer darin gelagerten Rotorwelle, an deren gehäuseseitigem Ende ein mit konischer Oberfläche ausgebildeter Rotor (2) befestigt ist, dem konzentrisch ein im Gehäuse befestigter Stator (3) zugeordnet ist, wobei Rotor (2) und Stator (3) mit ihren einander zugekehrten Oberflächen einen Scherspalt (4) bilden, der von einem Ringraum (5) umschlossen ist, dem ein axialer Zuführstutzen (6) vorgeschaltet und mindestens ein radialer Auslassstutzen (7) nachgeschaltet ist, wobei Rotor (2) und Stator (3) zur Einstellung der Spaltweite axial verschiebbar gelagert sind, **dadurch gekennzeichnet, dass** die Polymerdispersion über den axialen Zuführstutzen (6) zugeführt, durch den Scherspalt (4) zwischen Rotor (2) und Stator (3) gefördert und hierbei unter vorbestimmter Schergeschwindigkeit und Scherdeformation gefällt und über den oder die radialen Auslassstutzen (7) ausgetragen wird, und wobei über mindestens eine Bohrung in der Rohrleitung dicht vor der Rotor/Stator-Vorrichtung und/oder über mindestens einen Spülstutzen (8) im Bereich des axialen Zuführstutzens (6) im Gehäuse (1) und/oder im Stator (3) mit Wasser, bevorzugt getaktet, gespült wird.

2. Verfahren nach Anspruch 1, **dadurch gekennzeichnet, dass** der Ringraum (5) um den Scherspalt (4) über den mindestens einen Spülstutzen (9) mit Wasser gespült wird.

3. Verfahren nach einem der Ansprüche 1 oder 2, **dadurch gekennzeichnet, dass** die Rotor/Stator-Vorrichtung bei einer Schergeschwindigkeit von 100 bis 1 Mio s⁻¹ und einer Scherdeformation von 1 bis 100.000 betrieben wird.

4. Verwendung des Verfahrens nach einem der Ansprüche 1 bis 3 zur Koagulation von Polymerdispersionen.

5. Verwendung nach Anspruch 4, **dadurch gekennzeichnet, dass** die Polymerdispersion eine Kautschukdispersion, bevorzugt eine Pfropfkautschukdispersion, ist.

## Claims

1. A process for the salt-free coagulation of polymer dispersions in a rotor/stator apparatus with a bearing block, a casing (1), a rotor shaft mounted therein, on whose end directed toward the casing a rotor (2) designed with a conical surface has been secured, there being a stator (3) secured within the casing and concentrically associated with the rotor, where those surfaces that face toward one another of the rotor (2) and of the stator (3) form a shear gap (4) enclosed by an annular space (5), upstream of which there is an axial feed neck (6) and downstream of which there is at least one radial outlet neck (7), and where rotor (2) and stator (3) have been mounted so as to be capable of axial shift in order to adjust the gap width, which comprises feeding the polymer dispersion by way of the axial feed neck (6), conveying it through the shear gap (4) between rotor (2) and stator (3), and during this procedure precipitating it at predetermined shear rate and shear deformation, and discharging it by way of the radial outlet neck(s) (7), and where water is used for flushing, preferably in cycles, by way of at least one hole in the pipeline prior to and very close to the rotor/stator apparatus, and/or by way of at least one purging neck (8) in the region of the axial feed neck (6) in the casing (1) and/or in the stator (3).

2. The process according to claim 1, wherein the annular space (5) around the shear gap (4) is purged with water by way of the at least one purging neck (9).

3. The process according to claim 1 or 2, wherein the rotor/stator apparatus is operated at a shear rate of from 100 to 1 million s⁻¹ and with a shear deformation of from 1 to 100 000.

4. The use of the process according to any of claims 1 to 3 for the coagulation of polymer dispersions.

5. The use according to claim 4, wherein the polymer dispersion is a rubber dispersion, preferably a graft rubber dispersion.

## Revendications

1. Procédé de coagulation sans sel de dispersions polymères dans un dispositif rotor/stator muni d'un support, d'un boîtier (1), d'un arbre de rotor monté dans le boîtier, un rotor (2) formé d'une surface conique étant fixé à son extrémité du côté du boîtier, un stator (3) fixé dans le boîtier étant disposé de manière concentrique par rapport au rotor, ledit rotor (2) et ledit stator (3) formant un intervalle de cisaillement (4) avec leurs surfaces opposées l'une à l'autre, ledit intervalle de cisaillement étant entouré d'une chambre annulaire (5) qui est connectée en amont à une conduite d'entrée axiale (6) et en aval à au moins une conduite de sortie radiale (7), ledit rotor (2) et ledit stator (3) étant montés de manière mobile axialement afin d'ajuster la largeur de l'intervalle, **caractérisé en ce que** la dispersion polymère est introduite par la conduite d'entrée axiale (6), passée au travers de l'intervalle de cisaillement (4) entre le rotor (2) et le stator (3) et précipitée à cet emplacement à une vitesse de cisaillement et une déformation de cisaillement prédéterminées, puis déchargée par la ou les conduites de sortie radiales (7), et **en ce qu'**elle est rincée avec de l'eau, de préférence de manière cadencée, par au moins un orifice dans la conduite peu avant le dispositif rotor/stator et/ou par au moins une conduite de rinçage (8) dans la région de la conduite d'entrée axiale (6) dans le boîtier (1) et/ou dans le stator (3).

2. Procédé selon la revendication 1, **caractérisé en ce que** la chambre annulaire (5) autour de l'intervalle de cisaillement (4) est rincée avec de l'eau par la ou les conduites de rinçage (9).

3. Procédé selon l'une quelconque des revendications 1 ou 2, **caractérisé en ce que** le dispositif rotor/stator est utilisé à une vitesse de cisaillement de 100 à 1 000 000 s⁻¹ et à une déformation de cisaillement de 1 à 100 000.

4. Utilisation du procédé selon l'une quelconque des revendications 1 à 3 pour la coagulation de dispersions polymères.

5. Utilisation selon la revendication 4, **caractérisée en ce que** la dispersion polymère est une dispersion de caoutchouc, de préférence une dispersion de caoutchouc greffé.
